# EUROPÄISCHE PATENTANMELDUNG

(11) **EP 3 345 589 A1**
(43) Veröffentlichungstag der Anmeldung: **11.07.2018**
(21) Anmeldenummer: 18158068.9
(22) Anmeldetag: 10.02.2012
(51) Int. Cl.: A61J 17/00

(54) **VERFAHREN ZUR HERSTELLUNG EINES SCHNULLERSAUGERS SOWIE SCHNULLERSAUGER**

(30) Priorität: 11.02.2011 AT 1882011
(62) Teilanmeldung aus: 12706434.3
(71) Anmelder: Mam Babyartikel Gesellschaft m.b.H., 1160 Wien (AT)
(72) Erfinder: RÖHRIG, Peter, 1160 Wien (AT)
(74) Vertreter: Sonn & Partner Patentanwälte

(57) **Zusammenfassung**

Verfahren zur Herstellung eines Schnullersaugers (15) sowie Schnullersauger (15) mit einem einen Hohlraum (4') ausbildenden Saugabschnitt (4), an welchen ein Schaft (5) anschließt, wobei ein Saugabschnitt (4) und den Schaft (5) aufweisender elastischer Hohlkörper (3) gespritzt oder in einem Tauchverfahren vorgeformt wird, wobei der vorgeformte Hohlkörper (3) eine Öffnung (6) aufweist und ein in den vom Saugabschnitt (5) ausgebildeten Hohlraum (4') verlaufendes Linearelement (13) in den vorgeformten Hohlkörper (3) eingesetzt wird, bevor gegenüberliegende Wandabschnitte (5') des vorgeformten Hohlkörpers (3) im Bereich des Schafts (5) miteinander verbunden werden.

## Beschreibung

Die Erfindung betrifft ein Verfahren zur Herstellung eines Schnullersaugers mit einem einen Hohlraum ausbildenden Saugabschnitt, an welchen ein Schaft anschließt, sowie einen Schnullersauger mit einem einen Hohlraum ausbildenden Saugabschnitt, an welchen ein Schaft anschließt.

Es ist bereits eine Vielzahl von unterschiedlichsten Schnullern bekannt, bei welchen ein Saugteil an einem Schild befestigt ist. Hierbei handelt es sich um Saugteile, welche aus einem Hohlkörper bestehen, so dass sich der Hohlkörper beim Anlegen eines Saugdrucks des Kindes elastisch verformt und sich der von den Saugerwänden eingeschlossene Hohlraum somit verkleinert. Sofern das den Schnuller verwendende Baby bzw. Kleinkind keine Saugkraft auf den Hohlkörper aufbringt, nimmt dieser wieder seine Ausgangsform an. Diese übliche Form von Hohlkörpersaugern entspricht im Wesentlichen einer Keulenform, d.h. einem Schaftabschnitt, über welchen der Hohlkörpersauger mit dem Schild verbunden ist, der einen vergleichsweise geringen Querschnitt aufweist, und welcher sich dann zu einem frei auskragenden Nippelteil bzw. Saugabschnitt verbreitert, der somit einen vergleichsweise großen Querschnitt aufweist.

Die Verwendung derartiger Schnuller durch Babys bzw. Kleinkinder bewirkt nachteiligerweise jedoch, dass die Zahnreihen des Babys bzw. Kleinkindes im Bereich des Schafts des Schnullers nicht vollständig geschlossen werden können. Insbesondere wirkt Bereich der Kiefer- bzw. Zahnanlage die elastische Rückstellkraft des Hohlkörpers auf das Kiefer bzw. die Zähne des Kleinkindes. Dies kann einen frontal offenen Biss mitverursachen, d.h. eine Fehlstellung der Zähne des heranwachsenden Kindes.

Aus der WO 99/04745 A ist bereits bekannt, bei einem herkömmlichen Hohlkörpersauger einen vergleichsweise flachen Transmitterkörper vorzusehen, welcher abgewinkelt ist, so dass der Transmitterkörper zwischen oberen und unteren Schneidezähnen eines Kleinkindes aufgenommen werden kann und somit versucht wird im Wesentlichen ein Schließen der Schneidezähne zu ermöglichen. Aufgrund der Ausbildung des Saugers als Hohlkörper muss jedoch auch dieser abgewinkelte Transmitterkörper doppelwandig ausgebildet sein, so dass sich eine vergleichsweise große Wandstärke auch im Bereich des gegenüber dem übrigen Sauger flachen Transmitterkörpers ergibt.

Eine ähnliche Lösung ist auch in der WO 98/02132 A beschrieben, wobei hier jedoch ein spezieller Saugkörper vorgesehen ist, der in der benutzten Stellung unterhalb der Lippe des Babys bzw. Kleinkindes angeordnet ist, so dass ein Lippenkontakt mit dem oberen Gaumenbereich möglich ist.

Weitere spezielle kieferorthopädische Hohlkörpersauger sind beispielsweise in der DE 102 27 787 A, der DE 43 18 693 A sowie der DE 828 288 C beschrieben. Auch hier ist jedoch die Wandstärke des Hohlkörpersaugers im Bereich der Kiefer- bzw. Zahnauflage aufgrund der doppelwandigen Ausbildung des Hohlkörpers nach unten hin begrenzt.

Aus der US 3,924,621 ist weiters ein Schnullersauger mit einem im Wesentlichen geschlossen-wandigen, bauchiger Saugkörper offenbart, der über eine Vielzahl von Verbindungselementen mit dem Schnullerschild verbunden, wobei zwischen den Verbindungselementen eine Öffnung verbleibt, so dass es der Zunge des Kindes ermöglicht wird, in diesen Freiraum einzudringen. Hierdurch soll ein direkter Kontakt der Zunge des Kindes mit den oberen Vorderzähnen sowie dem Gaumen ermöglicht werden. Die seitlichen Verbindungselemente sollen hierfür als eine Art Führung dienen, um die Zunge in ihre natürliche Lage zu führen.

Aus der WO 2004/087039 A ist ein im Querschnitt voll ausgebildeten Saugteil, bei welchem verschiedenste Entlüftungsrillen vorgesehen sein können, bekannt.

Die WO 98/27928 A1 offenbart einen herkömmlichen Hohlkörpersauger oder alternativ ein als Ganzes vollwandig ausgebildetes Saugabschnitt. In dem Hohlkörper oder dem als Ganzes vollwandig ausgebildeten Saugabschnitt ist eine Tasche zur Aufnahme einer Tablette vorgesehen.

Die WO 96/20687 A1 zeigt einen Schnuller mit einem speziellen Saugteil, der Vorsprünge in Richtung der Alveolar-Grate aufweist. Der Saugkörper kann hierbei entweder als Ganzer hohl oder jedoch voll ausgebildet sein.

Die WO 86/03402 A1 zeigt lediglich einen aus Silikongummi bestehenden Schnuller mit herkömmlichem hohlem Saugkörper. Weiters ist aus der GB 2168283 A ein Verfahren zum Spritzgießen eines hohlen Saugkörpers aus Silikongummi bekannt.

Die US 3,832,437 offenbart ein Verfahren zur Herstellung eines Hohlkörpers, wobei der den Hohlraum formende Dorn vor der vollständigen Aushärtung des Werkstücks durch eine kurzzeitig vergrößerte Öffnung des Formkörpers entnommen wird, woraufhin die Öffnung des Formkörpers vollständig verschlossen wird bevor die Aushärtung abgeschlossen ist und somit keine Öffnung am Werkstück verbleibt.

Ziel der vorliegenden Erfindung ist es hingegen ein Verfahren zur Herstellung eines Schnullersaugers zu schaffen, bei welchem ein im Wesentlichen bekannten Hohlkörpersaugern entsprechende Sauger hergestellt wird, wobei der Schnullersauger im Bereich der Kieferauflage bzw. im Zahnschlussbereich derart ausgebildet ist, dass ein durch die Benutzung des Schnullersaugers mitverursachter frontal offener Biss nach Möglichkeit vermieden wird.

Erfindungsgemäß wird dies durch ein Verfahren der eingangs angeführten Art erzielt, bei dem ein Saugabschnitt und den Schaft aufweisender elastischer Hohlkörper gespritzt oder in einem Tauchverfahren vorgeformt wird, wobei gegenüberliegende Wandabschnitte des vorgeformten Hohlkörpers im Bereich des Schafts miteinander verbunden werden. Erfindungsgemäß ist demzufolge ein zweistufiges Verfahren vorgesehen, bei dem zunächst ein Hohlkörper hergestellt wird, dessen äußere Form im Wesentlichen bekannten Hohlkörpersaugern entspricht. Nachdem dieser Hohlkörper-Schnullersauger vorgeformt wurde, werden gegenüberliegende Wandabschnitte des Hohlkörpers im Bereich des Schafts miteinander verbunden, so dass im Schaftbereich, d.h. im Bereich der Kiefer- bzw. Zahnanlage durch das Kleinkind, eine im Wesentlichen einwandige Ausbildung des im Saugabschnitt als Hohlkörper ausgebildeten Schnullersaugers ergibt. Durch dieses Herstellverfahren kann insbesondere verhindert werden, dass der fertige Schnullersauger im Bereich der Kiefer- bzw. Zahnanlage aufgrund der elastische Rückstellkraft des Hohlkörpers einen Druck auf das Kiefer- bzw. die Zähne ausübt, welcher die Ausbildung eines offenen Frontalbisses begünstigt; d.h. durch die dauerhafte Verbindung von gegenüberliegenden Wandabschnitten wird vorteilhafterweise das elastische Rückstellverhalten des Schnullersaugers im Schaftbereich eliminiert.

Die Verbindung der gegenüberliegenden Wandabschnitte kann vorteilhafterweise dadurch erzielt werden, dass zwischen den gegenüberliegende Wandabschnitten ein Verbindungsmaterial in viskoser Form eingebracht wird und das Verbindungsmaterial darauffolgend unter dem Einfluss von Druck und/oder Wärme zwecks Verbindung der Wandabschnitte in einen elastischen Zustand überführt wird. Durch das Einbringen eines viskosen Verbindungsmaterials verbindet sich das zuvor viskose Verbindungsmaterial beim Übergang in den elastischen Zustand innig mit den Wandabschnitten, so dass die verbundenen Wandabschnitte auch bei einer Beanspruchung auf Zug bzw. Dehnung miteinander verbunden bleiben.

Als viskoses Verbindungsmaterial kann für eine möglichst geringe Beeinflussung des Elastizitätsverhaltens des Schnullersaugers im Schaftbereich insbesondere ein im Wesentlichen den gleichen chemischen Aufbau wie das Material, aus welchem der vorgeformte Hohlkörper hergestellt wurde, vorgesehen sein. Sofern der Hohlkörper daher aus einem Silikon- oder einem (natürlichen) Gummi-Material besteht, wird vorteilhafterweise als viskoses Verbindungsmaterial ebenfalls eine Silikon- oder Latexmaterial eingesetzt. Bei Verwendung derartiger artgleicher viskoser Verbindungsmaterialien tritt beim Aushärtungsprozess, d.h. bei der Umwandlung des viskosen Verbindungsmaterials in seinen elastischen Zustand, vorteilhafterweise eine chemische Vernetzung zwischen den zu verbindenden Wandabschnitte und dem Verbindungsmaterials ein, so dass eine besonders innige, im Wesentlichen eine einzige homogene Schicht ausbildenden Verbindung der Wandabschnitte erzielt wird. Um einerseits eine zuverlässige Verbindung der Wandabschnitte zu erzielen, andererseits den Eintritt von Verbindungsmaterial über die zu verbindenden Wandabschnitte hinaus in den Hohlraum zu vermeiden, ist es günstig, wenn ca. 0,5 bis 3ml, insbesondere im Wesentlichen 1 bis 2ml, viskoses Verbindungsmaterial zwischen die zu verbindenden Wandabschnitte eingebracht wird.

Im Fall eines Gummi-Hohlkörpers ist es günstig, wenn das Verbindungsmaterial bei Einbringung zwischen den zu verbindenden Wandabschnitten einen Anteil von 40 -60% Latex und eine Viskosität von ca. 15 - 30 sec Ford Becher 5 aufweist. Hierdurch ergibt sich vorteilhafterweise, dass sich aufgrund der geringen Viskosität des Latexkonzentrats die eingebrachte Menge in dem Bereich der aneinander gepressten Wandabschnitte des Hohlkörper im Wesentlichen gleichmäßig verteilt.

Alternativ kann aber auch ein viskoses Verbindungsmaterial mit einem verschiedenartigen chemischen Aufbau wie das Material des vorgeformten Hohlkörpers eingesetzt werden. Hierbei tritt sodann eine Verklebung, d.h. ein Verbinden der Wandabschnitt durch Haften und nicht durch chemische oder physikalische Vernetzung ein.

Eine besonders innige Verbindung der gegenüberliegenden Wandabschnitte kann auch auf einfache Weise erzielt werden, wenn der vorgeformte Hohlkörper aus einem Gummi-Material besteht, das noch nicht vollständig ausvulkanisiert ist, wobei die zu verbindenden Wandabschnitte miteinander in Kontakt gebracht werden, bevor das Gummi-Material mittels Wärmezufuhr vollständig ausvulkanisiert wird. Unter Gummi-Material im erfindungsgemäßen Sinne ist vulkanisierter Kautschuk zu verstehen, wie er insbesondere aus dem Milchsaft (Latex) von tropischen Pflanzen gewonnen wird. Üblicherweise wird das Latex-Material bzw. eine Latex-Mischung bevor der vorgeformte Hohlkörper mittels Eintauchen einer Form in ein Latex-Bad hergestellt wird für ca. 24 Stunden auf 40-70°C erwärmt bzw. vorvulkanisiert; Tests haben gezeigt, dass bei einer Verkürzung dieser Vorvulkanisierungszeit, bei welcher das Latex-Material bzw. eine Latex-Mischung vorzugsweise für 18 bis 22 Stunden, insbesondere im Wesentlichen 20 Stunden, auf ca. 40-70°C, vorzugsweise auf im Wesentlichen 50-55°C, erwärmt wird, ein nicht vollständig ausvulkanisierter Hohlkörper erzielt wird, dessen Wandabschnitte - auch ohne Zugabe eines externen Verbindungsmaterials - durch anschließende Druckaufbringung und Erwärmung auf einfache Weise dauerhaft miteinander verbunden werden können. Aufgrund der verkürzten Vorvulkanisierungszeit weist das Latex-Material bzw. die Latex-Mischung einen höheren Wert auf dem sog. Schwellwert-Index ("swelling index") für Latexmaterialien auf; der Schwellwert des vorgeformten, nicht vollständig ausvulkanisierten Hohlkörpers beträgt vorzugsweise zwischen 80 und 100, insbesondere im Wesentlichen 90.

Um einen Druckausgleich zwischen dem im Wesentlichen geschlossenwandigen Saugabschnitt und der Umgebung zu ermöglichen, so dass das Sauggefühl für das Kleinkind an dem fertiggestellten Schnullersauger im Wesentlichen herkömmlichen Hohlkörper-Schnullersaugern entspricht, ist es vorteilhaft, wenn der vorgeformte Hohlkörper eine Öffnung aufweist, wobei ein in den vom Saugabschnitt ausgebildeten Hohlraum verlaufendes Linearelement in den vorgeformten Hohlkörper eingesetzt wird, bevor die beiden Wandabschnitte miteinander verbunden werden. Die Öffnung des vorgeformten Hohlkörpers ist hierbei am frei auslaufenden Ende des Schafts vorgesehen, d.h. jenem Abschnitt der mit einem Schnullerschild verbunden wird, so dass der durch das Linearelement ausgebildete Kanal vom geschlossen-wandigen Saugabschnitt zum Schnullerschild verläuft.

Zur Ausbildung eines Entlüftungskanals kann alternativ zur Anordnung eines Linearelements im Hohlkörper während die Wandabschnitte miteinander verbunden werden auch vorgesehen sein, dass beim Ausformen des vorgeformten Hohlkörpers zumindest eine vom Hohlraum des Saugabschnitts sich durch den Schaft zu einer Öffnung hin erstreckende kanalförmige Vertiefung ausgebildet wird.

Zur Verbindung der beiden Wandabschnitte hat sich als günstig herausgestellt, wenn ein Druck zum Verbinden der Wandabschnitte derart gewählt ist, dass die Wandstärke der Wandabschnitte im Verbindungsbereich auf zumindest 80% der Wandstärke der Wandabschnitte vor Verbindung der Wandabschnitte reduziert wird.

Um ungewünschte Bestandteile aus dem Material des Hohlkörpers zu entfernen, was insbesondere bei der Herstellung des Hohlkörpers aus natürlichem Latex zweckmäßig ist, ist es günstig, wenn der Hohlkörper vor Verbindung der Wandabschnitte von ungewollten chemischen Bestandteilen, z.B. Nitrosaminen, freigewaschen wird.

Weiters ist es insbesondere bei Gummi-Hohlkörpern vorteilhaft, wenn der Hohlkörper im verpressten Zustand für vorzugsweise zumindest 30 Minuten, insbesondere 30 bis 45 min, auf vorzugsweise 70 bis 100 °C erwärmt wird. Hierdurch wird eine hinreichende chemische Vernetzung im Falle von Gummi-Hohlkörpern zwischen den Wandabschnitten selbst oder zwischen einer elastischen Verbindungsschicht und den Wandabschnitten erzielt. Weiter ist es vorteilhaft, wenn der Hohlkörper, nachdem die Wandabschnitte nicht mehr aneinander gepresst werden, für 20 bis 30 Stunden bei ca. 70 bis 100°C erwärmt wird; hierdurch wird zuverlässig eine vollständige Ausvulkanisierung des Gummi-Materials des Hohlkörpers und gegebenenfalls des Verbindungsmaterials erzielt.

Der Schnullersauger der eingangs angeführten Art ist dadurch gekennzeichnet, dass gegenüberliegende Wandabschnitte eines gespritzten oder getauchten vorgeformten elastischen Hohlkörpers im Bereich des Schafts miteinander verbunden sind. Durch die Verbindung von gegenüberliegenden Wandabschnitten im Bereich des Schafts verlieren die Wandabschnitte des zuvor vorgeformten elastischen Hohlkörpers im Bereich des Schafts ihre elastische Rückstellkraft, wodurch vorteilhafterweise bei Benutzung des Schnullersaugers von dem Schnullersauger kein Druck auf die im Bereich des Schafts vorgesehenen Zähne bzw. Kieferabschnitte ausgeübt wird.

Um auf einfache Weise eine nach Möglichkeit dauerhafte Verbindung zwischen den gegenüberliegenden Wandabschnitten herzustellen, ist es günstig, wenn die verbundenen Wandabschnitte miteinander verklebt sind.

Eine besonders innige Verbindung zwischen den Wandabschnitten wird erzielt, wenn die verbundenen Wandabschnitte untereinander chemisch und/oder physikalisch vernetzt sind; eine derartige Verbindung ist insbesondere auch bei Zugbeanspruchungen unlösbar.

Um einen Druckausgleich zwischen dem im Wesentlichen geschlossenwandigen Saugabschnitt und der Umgebung zu ermöglichen, ist es günstig, wenn im Schaftbereich zumindest ein den Hohlraum mit einer Öffnung verbindender Kanal vorgesehen ist.

Weiters ist es zur Erhöhung der elastischen Rückstellkraft des Hohlkörpers und gleichzeitig zur Erzielung eine möglichst geringen Wandstärke im Bereich des Schafts zweckmäßig, wenn die Wand im Bereich des Hohlraums zumindest abschnittsweise, insbesondere in dem an den Verbindungsbereich anschließenden Abschnitt, ein größere Wandstärke aufweist als der Hohlkörper im Schaftbereich vor Verbindung der Wandabschnitte.

Die Erfindung wird nachstehend anhand eines bevorzugten Ausführungsbeispiels, auf das sie jedoch nicht beschränkt sein soll, im Detail erläutert. Im Einzelnen zeigen in den Zeichnungen:
Die vorliegende Offenbarung kann wiefolgt zusammengefasst werden:
   1. Verfahren zur Herstellung eines Schnullersaugers mit einem einen Hohlraum ausbildenden Saugabschnitt, an welchen ein Schaft anschließt, wobei ein Saugabschnitt und den Schaft aufweisender elastischer Hohlkörper gespritzt oder in einem Tauchverfahren vorgeformt wird, wobei gegenüberliegende Wandabschnitte (des vorgeformten Hohlkörpers im Bereich des Schafts miteinander verbunden werden.
   2. Verfahren nach Punkt 1, wobei zwischen den gegenüberliegenden Wandabschnitten ein Verbindungsmaterial in viskoser Form eingebracht wird und das Verbindungsmaterial darauffolgend unter dem Einfluss von Druck und/oder Wärme zwecks Verbindung der Wandabschnitte in einen elastischen Zustand überführt wird.
   3. Verfahren nach Punkt 1, wobei der Hohlkörper aus einem Gummi-Material besteht, das noch nicht vollständig ausvulkanisiert ist, wobei die zu verbindenden Wandabschnitte miteinander in Kontakt gebracht werden, bevor das Gummi-Material mittels Wärmezufuhr vollständig ausvulkanisiert wird.
   4. Verfahren nach einem der Punkte 1 bis 3, wobei der vorgeformte Hohlkörper eine Öffnung aufweist, wobei ein in den vom Saugabschnitt ausgebildeten Hohlraum verlaufendes Linearelement in den vorgeformten Hohlkörper eingesetzt wird, bevor die beiden Wandabschnitte miteinander verbunden werden.
   5. Verfahren nach einem der Punkte 1 bis 3, wobei beim Ausformen des vorgeformten Hohlkörpers zumindest eine vom Hohlraum es Saugabschnitts sich durch den Schaft zu einer Öffnung hin erstreckende kanalförmige Vertiefung ausgebildet wird.
   6. Verfahren nach einem der Punkte 2 oder 3, wobei ein Druck zum Verbinden der Wandabschnitte derart gewählt ist, dass die Wandstärke der Wandabschnitte im Verbindungsbereich auf zumindest 80% der Wandstärke der Wandabschnitte vor Verbindung der Wandabschnitte reduziert wird.
   7. Verfahren nach einem der Punkte 1 bis 6, wobei der Hohlkörper vor Verbindung der Wandabschnitte von ungewollten chemischen Bestandteilen, z.B. Nitrosaminen, freigewaschen wird.
   8. Verfahren nach einem der Punkte 2 oder 3, wobei der Hohlkörper unter Druckaufbringung bzw. Kontaktierung der Wandabschnitte für vorzugsweise zumindest 30 Minuten auf vorzugsweise 70 bis 100 °C erwärmt wird
   9. Verfahren nach einem der Punkte 2 oder 3, wobei der Hohlkörper, nachdem die Wandabschnitte nicht mehr aneinander gepresst werden, in einem Ofen für zwischen 20 und 30 Stunden bei ca. 70 bis 100°C erwärmt wird.
   10. Schnullersauger mit einem einen Hohlraum ausbildenden Saugabschnitt, an welchen ein Schaft anschließt, wobei gegenüberliegende Wandabschnitte eines gespritzten oder getauchten vorgeformten elastischen Hohlkörpers im Bereich des Schafts miteinander verbunden sind.
   11. Schnullersauger nach Punkt 10, wobei die verbundenen Wandabschnitte miteinander verklebt sind.
   12. Schnullersauger nach Punkt 10, wobei die verbundenen Wandabschnitte untereinander chemisch und/oder physikalisch vernetzt sind.
   13. Schnullersauger nach einem der Punkte 10 bis 12, wobei im Bereich des Schafts zumindest ein den Hohlraum mit einer Öffnung verbindender Kanal vorgesehen ist.
   14. Schnullersauger nach einem der Punkte 10 bis 13, wobei der vorgeformte Hohlkörper im Bereich des Hohlraums zumindest abschnittsweise, insbesondere in dem an den Schaft anschließenden Abschnitt, eine größere Wandstärke aufweist als der Hohlkörper im Schaft vor Verbindung der Wandabschnitte.

Fig. 1 eine Ansicht eines Tauchbades zur Herstellung eines vorgeformten Hohlkörpers;
Fig. 2 eine Ansicht des vorgeformten Hohlkörpers nach Entnahme der Form aus dem Tauchbad;
Fig. 3 eine Schnittansicht eines vorgeformten Hohlkörpers mit noch nicht verbundenen Wandabschnitten;
Fig. 4 eine Ansicht einer Waschlösung zwecks Reinigung des vorgeformten Hohlkörpers;
Fig. 5 eine perspektivische Ansicht einer Klemmvorrichtung zum Verbinden der Wandabschnitte eines Hohlkörpers in einer Offenstellung;
Fig. 6 eine perspektivische Ansicht der Klemmvorrichtung mit einem auf dem Unterteil aufgelegten Hohlkörper;
Fig. 7 eine perspektivische Ansicht der Klemmvorrichtung in einer geschlossenen Stellung;
Fig. 7a eine Ansicht eines in den Hohlkörper einzusetzenden Stiftelements;
Fig. 8 eine perspektivische Ansicht eines Schnullersaugers nach Verbindung der Wandabschnitte;
Fig. 9 eine Schnittansicht des Schnullersaugers gemäß der Linie IX-IX in Fig. 8; und
Fig. 10 eine Schnittansicht des Schnullersaugers nach Befestigung an einem Schnullerschild.

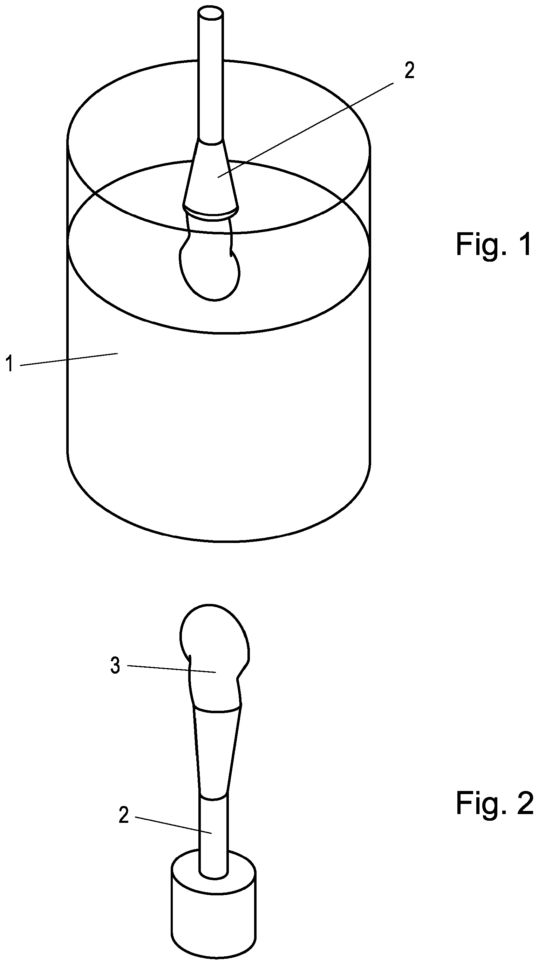

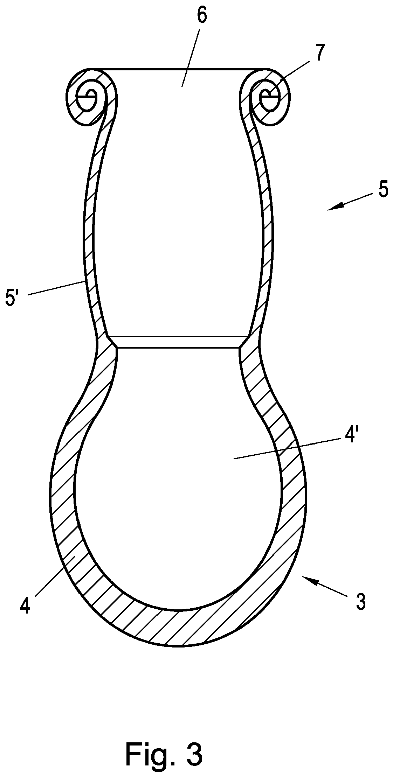

In Fig. 1 ist ein Behälter 1 gezeigt, der mit einer Latexflüssigkeit befüllt ist. Vorzugsweise handelt es sich hierbei um natürliches Latex, das einen Gummi- bzw. Kautschuk-Anteil von ca. 60% und einem Rest, der Großteils aus Wasser besteht, aufweist. In die Latexflüssigkeit wird eine Tauchform 2 eingetaucht, um einen vorgeformten Hohlkörper 3 herzustellen (vgl. Fig. 3). Die Tauchform 2 wird hierbei vorteilhafterweise auf ca. 55°-60° vorgewärmt, bevor sie in das Latex-Bad eingetaucht wird.

In den Fig.2 und 3 ist sodann vorgeformte Hohlkörper 3 gezeigt, wobei in Fig.2 der Hohlkörper 3 noch nicht von der Tauchform 2 entformt ist. Der in Fig. 3 gezeigte Hohlkörper 3 kann alternativ zu der Herstellung mittels eines Tauchverfahrens auch in einer (nicht näher gezeigten) Spritzgussform hergestellt werden; diese Herstellung im Spritzgussverfahren ist insbesondere günstig, sofern der vorgeformte Hohlkörper 3 aus Silikon oder einem thermoplastischen Elastomer (TPE) besteht.

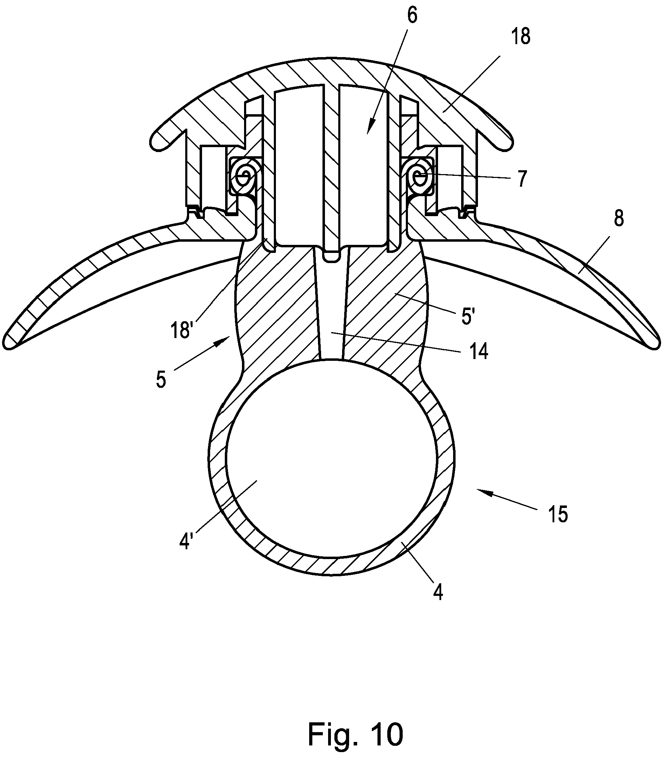

In Fig. 3 ist der vorgeformte Hohlkörper 3 mit einem bauchigen Hohlraum 4' bzw. Saugabschnitt 4 und einem Schaft 5, welcher endseitig eine Öffnung 6 aufweist, gezeigt. Zudem weist der Schaft 2 endseitig einen Flansch 7 zwecks Verbindung mit einem Schnullerschild 8 (vgl. Fig. 10) auf. Die Wandabschnitte 5' im Bereich des Schafts 5 sind noch nicht miteinander verbunden. Insbesondere ist auch ersichtlich, dass die Wandstärke im Bereich des Schafts 5 geringer als jene im Bereich des bauchigen Saugabschnitts 4 sein kann, wobei dies insbesondere bei der Herstellung eines vorgeformten Hohlkörpers 3 mittels Spritzguss auf einfache Weise möglich ist; bei der Herstellung im Tauchverfahren wird der vorgeformte Hohlkörper 3 üblicherweise eine im Wesentlichen konstante Wandstärke aufweisen.

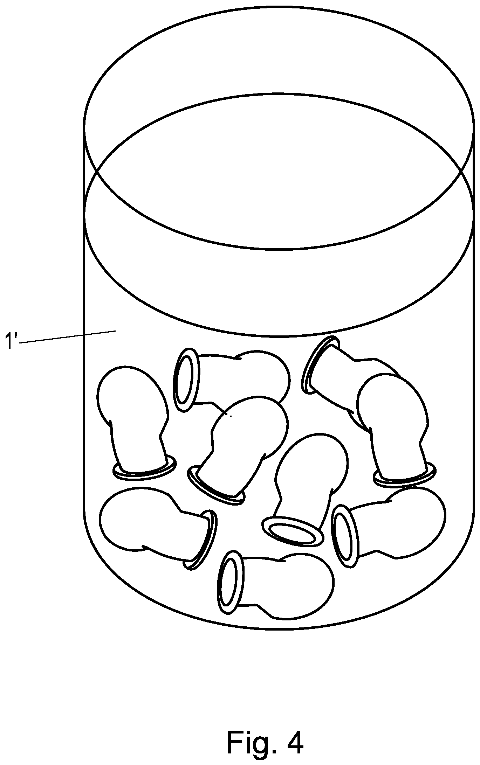

In Fig. 4 ist ein Waschvorgang gezeigt, wie dies insbesondere bei der Herstellung von Schnullersaugern aus Latex üblich ist. Hierbei werden die vorgeformten Hohlkörper 3 für ca. 24 bis 30 Stunden in einer in einem Behälter 1' aufgenommenen Waschlösung aufbewahrt, so dass ungewünschte Bestandteile des natürlichen Latex, insbesondere Nitrosamine, aus dem Latex-Material entfernt werden.

Anschließend werden Wandabschnitte 5' des Schafts 5 zumindest abschnittsweise miteinander verbunden, so dass der Hohlkörper 3 im Bereich des Schafts 5 nach Verbindung der Wandabschnitte 5' kein elastisches Rückstellverhalten zur Wiederherstellung der in Fig.3 gezeigten Form mehr aufweist.

Hierbei können die Wandabschnitte 5' entweder über eine chemische und/oder physikalische Vernetzung oder jedoch eine Verklebung, d.h. eine Haftverbindung, miteinander verbunden werden.

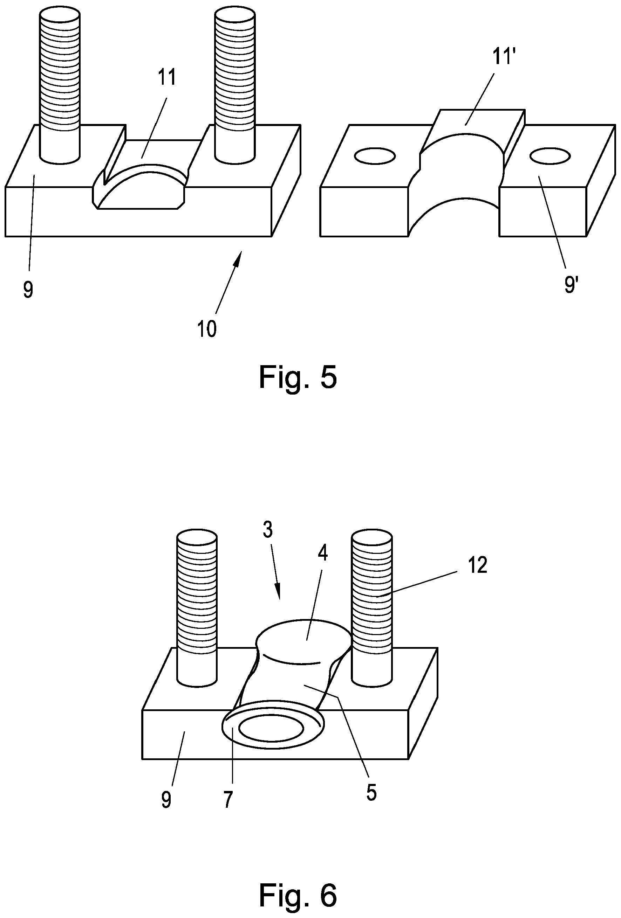

In Fig. 5 ist eine zwei Klemmteile 9, 9' aufweisende Klemmvorrichtung 10 ersichtlich. Der Klemmteil 9 weist hierbei eine Aussparung 11 auf, die zur (teilweisen) Aufnahme des vorgeformten Hohlkörpers 3 vorgesehen ist. Der Klemmteil 9' hingegen weist einen Vorsprung 11' auf, der dazu vorgesehen ist im verspannten Zustand der beiden Klemmteile 9, 9' ein erhöhten Druck auf die zu verbindenden Wandabschnitte 5' auszuüben.

In dem in Fig. 6 gezeigten eingelegten Zustand des Hohlkörpers 3 in der Klemmvorrichtung 10 ist ersichtlich, dass der bauchige Saugabschnitt 4 sowie das Ende des Schafts 5 im Bereich des Flansches 7 über die korrespondierenden Klemmflächen der Klemmvorrichtung 10 hinausragen, so dass es nur im Bereich der zu verbindenden Wandabschnitte 5' zu einer Druckaufbringung und Verbindung der gegenüberliegenden Wandabschnitte 5' kommt. Die Klemmteile 9, 9' können über Spannelemente 12, wie beispielsweise eine Schraube/Mutter-Verbindung oder hydraulisch betätigte Balken oder dergl., aneinander gepresst werden.

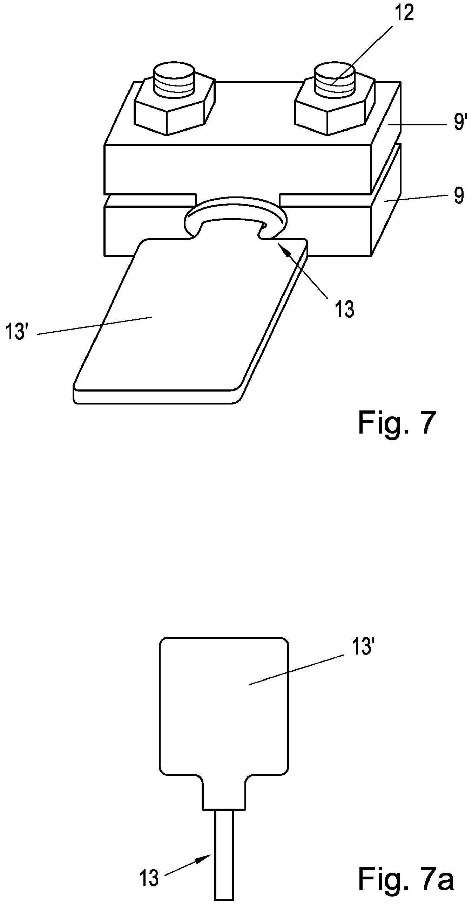

Bevor der Klemmteil 9' auf den unteren Klemmteil 9 aufgesetzt wird, wird in den Hohlkörper 3 ein stiftförmiges Element 13 mit einem Griffteil 13' eingesetzt (vgl. Fig. 7a), sodass nach der Verbindung der Wandabschnitte 5' des Hohlkörpers 3 im Bereich der Klemmflächen ein Kanal 14 zwischen dem Hohlraum 4' und der Öffnung 6 des dann fertiggestellten Schnullersaugers 15 verbleibt. Somit ist zuverlässig ein Druckausgleich zwischen dem Hohlraum 4' und der Umgebung auch nach Verbinden der Wandabschnitte 5' mittels der Klemmvorrichtung 10 gewährleistet.

Die in den Figuren 5 bis 7 gezeigte Klemmvorrichtung 10 ist insbesondere zum Verbinden von Wandabschnitten von aus Naturkautschuk hergestellten Hohlkörpern 3 geeignet. Zwecks einer innigen Verbindung der Oberflächen des Hohlkörpers 3 in dem über die Klemmflächen aneinander gepressten Bereich ist das Gummi-Material des Hohlkörpers 3 bei Druckaufbringung noch nicht vollständig ausvulkanisiert. Die Klemmvorichtung 10 wird samt dem darin aufgenommenem Hohlkörper 3 sodann für ca. 30-45 min auf ca. 70 bis 80°C erwärmt, so dass das Gummi-Material weiter ausvulkanisiert; hierbei tritt eine chemische Vernetzung der gegenüberliegenden, aneinandergepressten Wandabschnitte 5' auf, so dass diese dauerhaft miteinander verbunden sind. Anschließend werden die Schnullersauger 15 aus der Klemmvorrichtung 10 entnommen und aus den Schnullersaugern 15 werden die stiftförmigen Elemente 13 mit Hilfe des Griffs 13' entnommen, bevor die Schnullersauger 15 für ca. 24 bis 30h bei ca. 70 bis 100°C in einem Ofen erwärmt werden, um eine vollständige Ausvulkanisierung bzw. Trocknung des Gummimaterials zu erzielen.

Alternativ bzw. auch zusätzlich kann ein viskoses Latex-Verbindungsmaterial, wie z.B. Naturkautschuk in den Bereich des Schafts 5 eingebracht werden. Ein derartiges Verbindungsmaterial (= Latexkonzentrat) weist einen Anteil von ca. 40 -60% Latex und eine Viskosität von ca. 15 - 30 sec Ford Becher 5 auf, sodass aufgrund der geringen Viskosität des Latexkonzentrats die eingebrachte Menge, welche üblicherweise ca. 1 bis 2 ml beträgt, sich in dem Bereich der aneinander gepressten Wandabschnitte 5' des Hohlkörpers 3 im Wesentlichen gleichmäßig verteilt. Die Menge an eingebrachtem Latexkonzentrat ist hierbei so gewählt, dass zuverlässig kein Latexkonzentrat in den Hohlraum 4' eintritt, sondern sämtliches eingebrachtes Latexkonzentrat im Bereich der zu verbindenden Wandabschnitte 5' verbleibt. Nach Einbringen des Latexkonzentrats wird sodann zwecks Verbindung der Wandabschnitte 5' wie vorstehend beschrieben weiter verfahren.

Sofern kein Verbindungsmaterial, das im Wesentlichen den gleichen chemischen Aufbau aufweist verwendet wird, d.h. nicht wie vorstehend beschrieben ein Latexkonzentrat bei einem aus Latex vorgeformten Hohlkörper 3, sondern ein - nach Aushärtung - eine Haftschicht bildendes Verbindungsmaterial mit einem verschiedenartigen chemischen Aufbau, kann unabhängig davon aus welchem Material der vorgeformte Hohlkörper besteht, eine (Klebe-) Verbindung der Wandabschnitte 5' erzielt werden. Bevorzugt wird zur Herstellung des Hohlkörpers 3 und somit des Schnullersaugers 15 Latex, Silikon oder ein thermoplastisches Elastomer verwendet.

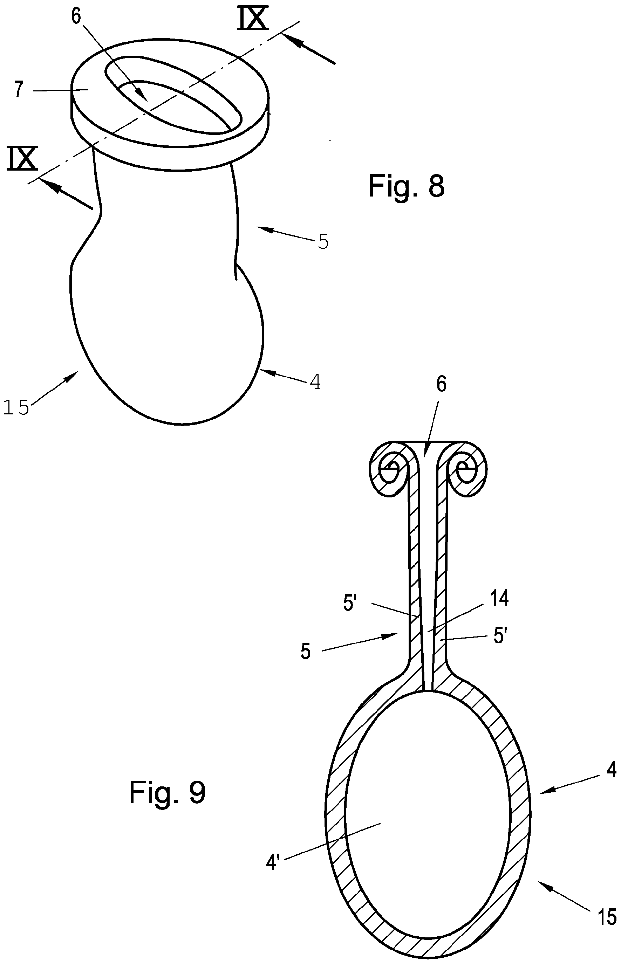

Wie in Fig. 9 gezeigt erstreckt sich ein von dem stiftförmigen Element 13' ausgebildeter Kanal 14 vom Hohlraum 4' über den Schaft 5 zur Öffnung 6. Der Kanal 14 stellt somit eine Verbindung vom Hohlraum 4' zur querschnittsgrößeren Öffnung 6 bzw. der Umgebung her, so dass zuverlässig ein Druckausgleich zwischen dem Hohlraum 4' des Schnullersaugers 15 und der Umgebung erfolgen kann.

In der Schnittansicht gemäß Fig. 10 ist ersichtlich, dass der im Schaftbereich nach der Verbindung der beiden Wandabschnitte 5' im Wesentlichen einwandig ausgebildete Schaft 5 in herkömmlicher Weise an einem Schnullerschild 8 montierbar ist. Hierfür ist ein an sich bekanntes Befestigungselement 18 vorgesehen, welches mit einem zapfenförmigen Vorsprung 18' in die querschnittsgrößere Öffnung 6 des Schnullersaugers 15 bzw. des Hohlkörpers 3 eindringt, wobei der Schaft 5 bzw. der Flansch 7 sodann form- und kraftschlüssig zwischen dem Schnullerschild 8 und dem Befestigungsteil 18 aufgenommen wird. Da der Kanal 14 im Verbindungsbereich mit dem Schnullerschild 8 bzw. dem Befestigungselement 18 offen verbleibt, ist zuverlässig eine Entlüftung aus dem Hohlraum 4' sowie ein Druckausgleich mit der Umgebung möglich.

## Patentansprüche

1. Verfahren zur Herstellung eines Schnullersaugers (15) mit einem einen Hohlraum (4') ausbildenden Saugabschnitt (4), an welchen ein Schaft (5) anschließt, wobei ein Saugabschnitt (4) und den Schaft (5) aufweisender elastischer Hohlkörper (3) gespritzt oder in einem Tauchverfahren vorgeformt wird, wobei der vorgeformte Hohlkörper (3) eine Öffnung (6) aufweist, **dadurch gekennzeichnet, dass** ein in den vom Saugabschnitt (5) ausgebildeten Hohlraum (4') verlaufendes Linearelement (13) in den vorgeformten Hohlkörper (3) eingesetzt wird, bevor gegenüberliegende Wandabschnitte (5') des vorgeformten Hohlkörpers (3) im Bereich des Schafts (5) miteinander verbunden werden, wobei zwischen den gegenüberliegende Wandabschnitten (5') ein Verbindungsmaterial in viskoser Form eingebracht wird und das Verbindungsmaterial darauffolgend unter dem Einfluss von Druck und/oder Wärme zwecks Verbindung der Wandabschnitte (5') in einen elastischen Zustand überführt wird oder der vorgeformte Hohlkörper (3) aus einem Gummi-Material besteht, das noch nicht vollständig ausvulkanisiert ist, wobei die zu verbindenden Wandabschnitte (5') miteinander in Kontakt gebracht werden, bevor das Gummi-Material mittels Wärmezufuhr vollständig ausvulkanisiert wird.

2. Verfahren nach Anspruch 1, **dadurch gekennzeichnet, dass** beim Ausformen des vorgeformten Hohlkörpers (3) zumindest eine vom Hohlraum (4') des Saugabschnitts (4) sich durch den Schaft (5) zu einer Öffnung (6) hin erstreckende kanalförmige Vertiefung ausgebildet wird.

3. Verfahren nach Anspruch 1, **dadurch gekennzeichnet, dass** ein Druck zum Verbinden der Wandabschnitte (5') derart gewählt ist, dass die Wandstärke der Wandabschnitte (5') im Verbindungsbereich auf zumindest 80% der Wandstärke der Wandabschnitte (5') vor Verbindung der Wandabschnitte (5') reduziert wird.

4. Verfahren nach einem der Ansprüche 1 bis 3, **dadurch gekennzeichnet, dass** der Hohlkörper (3) vor Verbindung der Wandabschnitte (5') von ungewollten chemischen Bestandteilen, z.B. Nitrosaminen, freigewaschen wird.

5. Verfahren nach Anspruch 1, **dadurch gekennzeichnet, dass** der Hohlkörper (3) unter Druckaufbringung bzw. Kontaktierung der Wandabschnitte für vorzugsweise zumindest 30 Minuten auf vorzugsweise 70 bis 100 °C erwärmt wird.

6. Verfahren nach Anspruch 1, **dadurch gekennzeichnet, dass** der Hohlkörper (3), nachdem die Wandabschnitte (5') nicht mehr aneinandergepresst werden, in einem Ofen für zwischen 20 und 30 Stunden bei ca. 70 bis 100°C erwärmt wird.

7. Schnullersauger (15) mit einem einen Hohlraum (4') ausbildenden Saugabschnitt (4), an welchen ein Schaft (5) anschließt, wobei ein gespritzter oder getauchten vorgeformter elastischer Hohlkörper (3) vorgesehen ist, **dadurch gekennzeichnet, dass** gegenüberliegende Wandabschnitte (5') des gespritzten oder getauchten vorgeformten elastischen Hohlkörpers (3) im Bereich des Schafts (5) miteinander verbunden sind, wobei die verbundenen Wandabschnitte (5') miteinander verklebt oder untereinander chemisch und/oder physikalisch vernetzt sind und im Bereich des Schafts (5) zumindest ein den Hohlraum (4') mit einer Öffnung (6) verbindender Kanal (14) vorgesehen ist.

8. Schnullersauger nach Anspruch 7, **dadurch gekennzeichnet, dass** der vorgeformte Hohlkörper (3) im Bereich des Hohlraums (4') zumindest abschnittsweise, insbesondere in dem an den Schaft (5) anschließenden Abschnitt, eine größere Wandstärke aufweist als der Hohlkörper (3) im Schaft (5) vor Verbindung der Wandabschnitte (5').
